# EUROPEAN PATENT SPECIFICATION

(11) **EP 1 544 051 B1**
(45) Date of publication and mention of the grant of the patent: **09.08.2006**
(21) Application number: 03380300.8
(22) Date of filing: 19.12.2003
(51) Int. Cl.: B60R 21/04, F16F 7/12, F16B 5/00

(54) **Modular structure for energy absorption in head impacts on vehicle interiors**
Modulare Struktur zur Energieaufnahme beim Kopfaufprall auf Fahrzeuginnenteile
Structure modulaire pour l'absorption d'énergie lors d'un choc de la tête sur l'habillage d'un véhicule

(43) Date of publication of application: 22.06.2005
(73) Proprietor: Grupo Antolin Ingenieria, S.A., 09007 Burgos (ES)
(72) Inventor: Soto Bailon, Arturo, 09004 Brugos (ES); Abajo Alonso, Julio César, 34003 Palencia (ES)
(74) Representative: Esteban Perez-Serrano, Maria Isabel

(56) References cited:
- EP-A- 0 863 056
- US-A- 5 806 889
- PATENT ABSTRACTS OF JAPAN vol. 1997, no. 10, 31 October 1997 (1997-10-31) & JP 9 150692 A (PACIFIC IND CO LTD), 10 June 1997 (1997-06-10)

## Description

The present invention refers to a modular structure for energy absorption of impacts in vehicle interiors, conceived to become part of the interior lining of the ceiling of a vehicle, for the purpose of reducing the risks of injury caused to an occupant or occupants of a vehicle when impacting against the internal surface of the ceiling thereof.

The structure of the invention is applicable to all those parts of a vehicle interior susceptible to undergoing head impact of the occupants of said vehicle, especially in the case of accidents.

Until today, different types of solutions for protecting the body of the occupants in case of accident have been used, reducing the injuries caused by impact against them in any part of the vehicle.

All these solutions achieve their objective by means of the management of the kinetic energy generated and transmitted to the occupants during an impact, either by absorption of part of said energy or by distribution thereof towards other areas.

In order to achieve these objectives, the use of structures of different nature or constitution is known, among which blocks of foamed plastic materials, plastic ribbed structures, structures based on deformable hollow bodies, deformable metallic structures, etc., can be mentioned.

Foam blocks are three-dimensional elements of different foamed plastic materials, with different compositions, densities, rigidities, etc., capable of absorbing energy when compressed, either by destruction of their open cells, or by compression of their closed cells. Behaviour is uniform inside each foam block, it being impossible to establish areas with different responses or with a progressive or sequential behaviour, i.e. they do not allow a differential control, neither by areas, nor in terms of impact severity, inside each absorbing element.

With respect to the plastic ribbed structures, these are shaped such that the ribs are capable of absorbing energy by deformation of the walls of the defined structures or by collapse thereof, for example when subjected to a compression, or when a body impacts against them. In principle, the geometry of the ribs and spatial arrangement determine their behaviour. This type of structure requires a plastic base on which the ribs are placed, and which in turn needs to be coupled to the surface on which it is to work, the design of the ribbed structure thus conditioning that of the surface and of the base plate itself. All this is due to the fact that, on the one hand, a good placement of said plastic base on the support surface in the vehicle or in the component is required, and on the other hand, the injection process used for manufacturing this type of plastic structures conditions and limits its geometry.

Structures based on deformable hollow bodies can be considered as an evolution of ribbed structures, in which energy absorption capability is increased by replacing the walls or ribs with other geometries with different manners of collapsing. These structures also require a plastic base on which the geometric figures are placed, and which in turn needs to be coupled to the surface on which it is to work, the design of the base plate of the structure itself conditioning the shape of said surface. They therefore present the same problem as ribbed structures, but as they have more complex geometries than the simple walls of a rib, the limitations in terms of possible shapes and designs are greater.

Finally, deformable metallic structures are widely applied in other fields of passive safety, for example, deformable impact barriers usually used in impact tests. The geometry and shape of these structures can either be similar to any of those previously mentioned in plastic, or can have a specific shape. The main limitation is their cost, as well as the aforementioned limitations in the case of producing any of the types of the structures mentioned.

The structure of the invention is based on hollow bodies of plastic material which present an open end section and which can adopt a frusto-conical or frusto-pyramidal shape etc., and have an open major base.

A structure of the type discussed is disclosed, for example, in Japanese patent 56131849. According to said patent, the structure is made up of at least two bodies which can adopt the shape of a hollow cone and which are joined to a support in the shape of a plate, the hollow bodies furthermore being linked by connection ribs. A similar constitution is described in document EP 0863056, where the structure is also made up of hollow bodies, which can adopt a cylindrical or conical shape and which project from or are joined to a support base, furthermore being connected by intermediate ribs. With the constitution discussed, the structures must be coupled to the surface on which they are assembled through the plate or plastic base, which conditions the design of the surface on which it is applied and of the base plate itself, since the arrangement of these structures requires a good placement of the base plate on the support surface on which it is arranged. Furthermore, as has already been pointed out, the manufacturing process used in this type of structure conditions and limits the geometry thereof. Since the hollow bodies are connected by the base plate and by intermediate ribs and partitions, their capability of adaptation and of effectiveness are reduced.

A structure of the type set forth is considered to be the dosert prior art and is disclosed in 9-JP-150692 A.

Said patent application discloses a modular structure for energy absorption in head impacts on vehicle interiors constituted of a set of deformable hollow bodies having an open end section, each one of said bodies being placed with their open bases initially on a single plane, and linked together by means of flexible bridges running between the open spaces of adjacent bodies.

According to said patent application, the structure is made up of hollow bodies, for example of a frusto-conical shape with an open major base, which are joined by intermediate ribs, having as a fundamental characteristic the fact that the whole structure is a single part. This circumstance implies a problem when having to modify the initially defined structure according to the different requirements which need to be achieved for each specific situation and in the different application areas. This problem is of special importance in the test and validation phases, in which each geometric modification to be validated implies expensive and relatively slow changes in design and in the manufacturing tools of the prototypes to be tested. On the other hand, in all the analysed cases, since all the hollow bodies are fixed to the base plate and the latter has a predefined rigid shape, they are incapable of absorbing the geometric diffusions due to the usual tolerances in the working area, which prevents the structure from perfectly adapting itself to the zone to be protected, making the correct support thereof difficult and thus deducting efficacy from the system.

The object of the present invention is to eliminate the problems mentioned by means of a structure of the type described, constituted such that it allows a perfect adaptation to the surface to be protected, and additionally to introduce different shapes in a versatile manner.

The present invention develops a flexible and adaptable structure, formed by hollow bodies of different shapes and dimensions, joined together by flexible elements, without the need to use a uniform base plate. In addition to the high flexibility offered, this constitution, allows the structure to be adaptable to the geometry of any support surface.

As initially indicated, the structure of the invention is of the type constituted of a set of deformable hollow bodies which present an open end section and which can adopt a frusto-conical shape, with an open major base.

The structure of the invention is defined by the features of claim 1. It is characterised in that said hollow bodies are arranged in independent clusters, in each one of which said bodies are placed with the open base in coplanar position and joined together by means of flexible bridges running between the edges of the open bases of adjacent bodies. These clusters will preferably have a regular polygonal outline, and will have, from said outline, flexible half bridges provided with mutual connection means, which project from the edge of the

open bases of at least part of the hollow bodies occupying outer positions in said clusters.

The hollow bodies in each cluster will be equal to one another, whereas they can have different dimensions and shapes in different clusters. Furthermore, the hollow bodies in each cluster will preferably be aligned following two perpendicular directions, and will be situated at equidistant positions.

In this way, the structure of the invention will be of a modular constitution, based on clusters of outlines of equal or different dimensions, the structure being able to include clusters with deformable hollow bodies of different dimensions and/or shapes.

In this way, the structure of the invention can be constituted of several clusters or modules which are joined or connected together through the flexible half bridges, for which reason it will be possible to use different combinations of modules of deformable hollow bodies with different dimensions, adapting each shape to the different severities at the different possible points of impact in the vehicle interior, or to the different geometries thereof.

Once the structure of the invention is formed, starting from clusters or modules, all the hollow bodies are joined or linked by means of flexible bridges, such that the relative position of all the deformable hollow bodies on the work surface is maintained, maintaining however the independence of the behaviour of each one of the deformable hollow bodies.

The connection means of the flexible half bridges can consist of a pin perpendicularly projecting from the end of one of the half bridges, and of an orifice finishing off the free end of the complementary half bridges, for the mutual connection by means of introducing the pins of determined half bridges through the orifices of complementary half bridges.

The hollow bodies making up the structure of the invention, preferably of a frusto-conical shape, are provided with an outlying rim around the open section or base, from which the flexible connection bridges between hollow bodies and the external half bridges project.

The advantages provided by the structure of the invention are the following:
- Easy adaptation of the solution to different shapes and/or different specifications, individually changing the number, the arrangement and the size of the deformable hollow bodies used in a simple manner, being able to optimise the structure for each vehicle, for each impact area and for each specific situation.
- A wide variety of geometric shapes can be obtained with a limited number of basic geometries, covering a large variety of different situations.
- Modifications of the structure only imply changing the combination of deformable hollow bodies used, the behaviour of which is perfectly known and completely independent of the rest of the structure, in comparison to what occurs in the structures assembled on plates, where the behaviour of each deformable hollow body cannot be made independent, which implies the need to carry out a complete study for each new shape.
- The flexibility of the system allows perfect adaptation to the work surface, absorbing any type of geometric deviation, whereas in the known systems, since the structure is rigid, it is not possible to correct possible geometric diffusions, for which reason the coupling will always be worse, to the detriment of their behaviour in case of impact.
- A wide variety of geometric shapes can be obtained with a limited number of basic geometries, covering a large variety of different situations.

In short, the invention is basically focused on achieving a structure of deformable hollow bodies which have the capability to absorb energy when they collapse by being subjected to a determined force. In these structures, the hollow bodies forming them are joined together by means of flexible ribs allowing each deformable hollow body to behave independently of the rest of the structure. Furthermore, the structure is made up of clusters or modules which can be of equal or different dimensions, and which can also include hollow bodies of equal of different sizes, allowing very different shapes and structures to be obtained by simply changing the number and type of assembled elements.

Furthermore, said connection ribs between adjacent deformable hollow bodies are rigid enough to maintain the relative positions between them, but with enough flexibility to make the adaptation of the structure to surfaces with different shapes possible.

The structure of the invention is specially indicated in the construction of components for head impact absorption in automobiles, which are usually placed between the trim of the ceiling and the structure of the vehicle roof.

For the purpose of better understanding the features and advantages of the structure of the invention, a more detailed description is made below of a preferred embodiment thereof with the help of the attached drawings, which show a non-limiting embodiment example in which the deformable hollow bodies are conical frustums which are open and joined at their major bases.

In the drawings:
Figure 1 shows a perspective view of a structure constituted according to the invention.
Figure 2 shows a partial section view of the structure of the invention taken following the II-II cut line of Figure 1.
Figure 3 shows a schematic section view of a structure constituted according to the invention, assembled on the interior surface of the ceiling trim of a vehicle.

The structure of the invention, as has been set forth, is constituted of a set of deformable hollow bodies with an open end section, these bodies being able to adopt a frusto-conical shape with an open lower base.

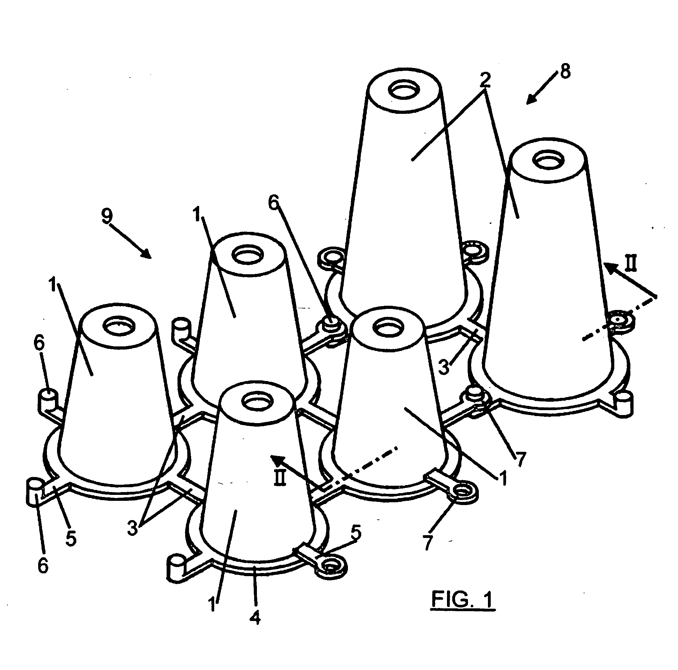

Figure 1 shows a structure constituted according to the invention including two-dimensional frusto-conical shaped hollow bodies, minor ones referenced with number 1 and major ones referenced with number 2. The conical bodies 1 and 2 form two different clusters or modules. In each of one these clusters, the conical bodies, referenced with number 1 in one case and with number 2 in the other, are joined by intermediate flexible bridges generally referenced with number 3.

In the two clusters or modules, the frusto-conical bodies 2 are encircled from the open major base by an outlying rim 4 from which the flexible bridges 3 project.

Furthermore, according to another feature of the invention, flexible half bridges 5 finished off by mutual connection means, referenced with numbers 6 and 7, project from each cluster or module. These flexible half bridges 5 project from the outlying rim 4 of the frusto-conical bodies 1 occupying outer positions in the cluster or module, being situated in a position diametrically opposite to certain flexible bridges 3.

Preferably, fixing means 6 and 7 are constituted respectively of male and female elements. The male element 6 consists of a pin perpendicularly projecting from the half bridge 5, whilst the female element 7 is constituted of a hole formed at the end of the corresponding half bridge, with a section coinciding to that of pin 6. In this way, as seen in Figure 1, the pins 6 of the cluster or module 8 are inserted through the holes or orifices of the cluster or module 9.

In the example represented in Figure 1, the module 9 includes four frusto-conical bodies and the module 8 includes two. Nevertheless, each cluster or module can include a greater number of hollow bodies, which are preferably aligned according to two perpendicular directions, the cluster or module having a preferably regular polygonal outline, for example square or rectangular.

With the constitution set forth, a structure can be made up of two or more modules, all with conical bodies of equal or different dimensions, according to the specific application of the structure.

On the other hand, the hollow bodies can adopt a different shape to that represented in the drawings, for example a frusto-pyramidal shape.

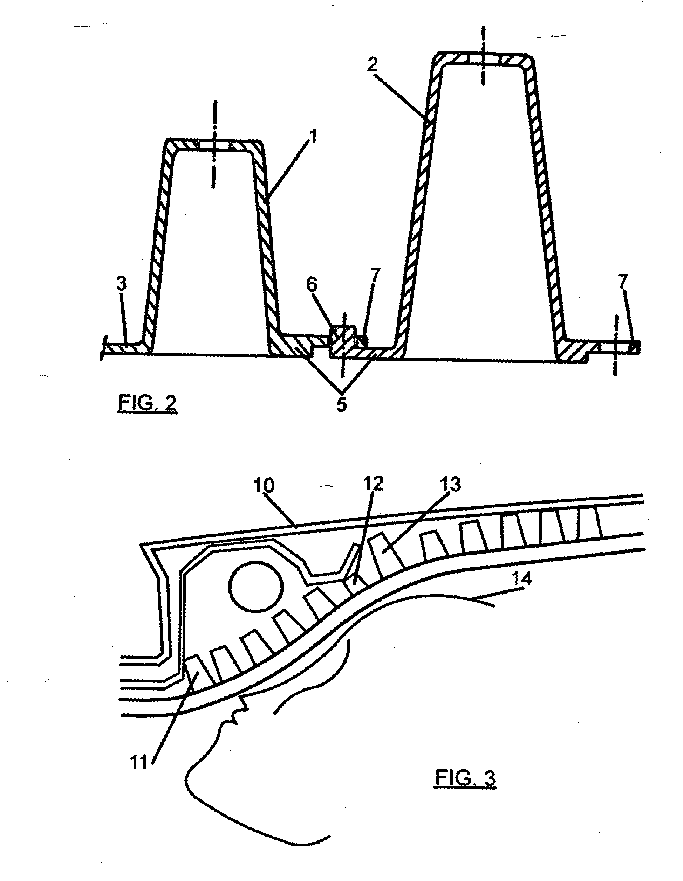

With the constitution set forth, as represented in Figure 3, a structure covering the internal surface of the ceiling 10 of a vehicle can be provided, this structure being made up of a series of clusters or modules, including conical bodies referenced with numbers 11, 12 and 13 of different dimensions, each of them adapted to the exact point to be covered.

This possibility of obtaining a structure adapted to the surface to be covered at each point implies a considerable advantage, and is achieved as a result of the formation of the structure by means of independent clusters or modules, which are joined together by means of flexible bridges.

Additionally, as indicated, the structure of the invention implies a great advantage when it comes to applying it to vehicle impact tests.

Additionally, as can be understood, the connection means between consecutive clusters or modules can be different to the pin 6 and hole 7 shown in Figures 1 and 2.

## Claims

1. A modular structure for energy absorption in head impacts on vehicle interiors constituted of a set of deformable hollow bodies (1,2) having an open end section, whereby said bodies (1, 2) are arranged in interconnected independent clusters (8, 9); in each one of which said bodies (1, 2) are placed with their open bases initially on a single plane, and linked together by means of flexible bridges (3) running between the open bases of adjacent bodies (1, 2), said clusters (8,9), following their outline, being provided with flexible half bridges (5) provided with mutual connection means (6,7) which project from the edge of the open bases of at least part of the hollow bodies (1,2) occupying outer positions in said clusters (8,9).

2. A structure according to claim 1, **characterised in that** the hollow bodies (1,2) in each cluster (8,9) are aligned according to two perpendicular directions and are situated at equidistant positions.

3. A structure according to the previous claims, **characterised in that** the hollow bodies (1,2) are provided, around the open end section, with an outlying rim from which the flexible connection bridges (3) between the hollow bodies and the outer half bridges (5) project.

4. A structure according to claim 1, **characterised in that** all the hollow bodies (1,2) of each cluster (8,9) are equal to one another.

5. A structure according to claim 1, **characterised in that** it is made up of clusters (8,9), each one of which includes a different number of hollow parts.

6. A structure according to claim 1, **characterised in that** it comprises clusters (8,9) the hollow parts of which are of different dimensions.

7. A structure according to claim 1, **characterised in that** the mutual connection means of the flexible half bridges (5) consist of a hole and pin which can be coupled together which each pair of connectable flexible half bridges (5) has at its free end.

## Patentansprüche

1. Eine modulare Struktur zur Energieaufnahme bei einem Aufprall des Kopfes im Inneren des Fahrzeugs, bestehend aus einer Anordnung von verformabaren hohlen Körpern (1,2), die einen offenen Endabschnitt haben, wobei die besagten Körper (1,2) in untereinander verbundenen, unabhängigen Gruppen (8,9) angeordnet sind, in denen in jeder die besagten Körper (1,2) gesetzt werden mit den offenen Sockeln anfänglich auf einer einzigen Ebene und miteinander durch flexible Brücken (3) verbunden, die zwischen den offenen Sockeln der nebeneinanderliegenden Körper (1,2) der besagten Gruppen (8,9) verlaufen und deren Umriss folgen, wobei sie über flexible Halbbrücken (5) verfügen, die gegenseitige Verbindungsmittel (6,7) aufweisen, die aus der Kante der offenen Sockel wenigstens eines Teils der hohlen Körper (1,2) herausragen und äussere Positionen in den besagten Gruppen (8,9) einnehmen.

2. Eine Struktur gemäss Anspruch 1, **dadurch gekennzeichnet, dass** die hohlen Körper (1,2) gemäss zweier senkrecht zueinander stehenden Richtungen ausgerichtet sind und sich in Positionen gleicher Abstände befinden.

3. Eine Struktur gemäss der vorangegangenen Ansprüche, **dadurch gekennzeichnet, dass** die hohlen Körper (1,2) über eine Randzone um den offenen Endbereich verfügen, von der aus die flexiblen Verbindungsbrücken (3) zwischen den hohlen Körpern und den äusseren Halbbrücken (5) auskragen.

4. Eine Struktur gemäss Anspruch 1, **dadurch gekennzeichnet, dass** alle hohlen Körper (1,2) jeder Gruppe (8,9) miteinander identisch sind.

5. Eine Struktur gemäss Anspruch 1, **dadurch gekennzeichnet, dass** es sie aus Gruppen, (8,9) besteht, von denen jede eine unterschiedliche Anzahl an hohler Teile umfasst.

6. Eine Struktur gemäss Anspruch 1, **dadurch gekennzeichnet, dass** sie Gruppen (8,9) umfasst, deren hohle Teile unterschiedliche Masse aufweisen.

7. Eine Struktur gemäss Anspruch 1, **dadurch gekennzeichnet, dass** die gegenseitigen Verbindungsmittel der flexiblen Halbbrücken (5) aus einem Loch und einem Stift bestehen, die miteinander verbunden werden können und die jedes Paar von verbindbaren flexiblen Halbbrücken (5) an seinem freien Ende aufweist.

## Revendications

1. Une structure modulaire pour l'absorption d'énergie lors des impacts à la tête à l'intérieur d'un véhicule constituée par un ensemble de corps (1, 2) creux déformables ayant une section à extrémité ouverte, en conséquence lesdits corps (1, 2) sont disposés dans des groupes (8, 9) indépendants interconnectés, dans chacun desquels lesdits corps (1, 2) sont placés avec leurs bases ouvertes initialement sur un plan unique, et réunis ensemble au moyen de ponts flexibles (3) qui s'étendent entre les bases ouvertes des corps (1, 2) attenants ; lesdits groupes (8 ,9), suivant leur contour qui est pourvu de demi-ponts (5) flexibles pourvus de moyens (6, 7) de connexion mutuelle qui se projettent à partir du bord des bases ouvertes d'au moins une partie des corps (1, 2) creux qui occupent les positions extérieures dans lesdits groupes (8, 9).

2. Une structure selon la revendication 1, **caractérisée en ce que** les corps (1, 2) creux dans chaque groupe (8, 9) sont alignés selon deux directions perpendiculaires et ils sont situés dans des positions équidistantes.

3. Une structure selon les revendications antérieures, **caractérisée en ce que** les corps (1, 2) creux sont pourvus, autour de la section à extrémité ouverte, d'un rebord de contour à partir duquel se projettent les ponts (3) de connexion flexibles entre les corps creux et les demi-ponts (5) extérieurs.

4. Une structure selon la revendication 1, **caractérisée en ce que** tous les corps (1, 2) creux de chaque groupe (8, 9) sont identiques les uns aux autres.

5. Une structure selon la revendication 1, **caractérisée en ce qu'**elle est constituée de groupes (8, 9), chacun desquels inclut un nombre différent de parties creuses.

6. Une structure selon la revendication 1, **caractérisée en ce qu'**elle comprend des groupes (8,9), dont les parties creuses ont des dimensions différentes.

7. Une structure selon la revendication 1, **caractérisée en ce que** les moyens de connexion mutuelle des demi-ponts (5) flexibles consistent en un orifice et une broche qui peuvent s'accoupler ensemble, lesquels chaque paire de demi-ponts (5) flexible connectable a à son extrémité libre.
